# EUROPEAN PATENT APPLICATION

(11) **EP 1 753 182 A1**
(43) Date of publication of application: **14.02.2007**
(21) Application number: 05819664.3
(22) Date of filing: 21.12.2005
(51) Int. Cl.: H04L 12/56

(54) **A METHOD FOR NODE RESTART RECOVERY IN THE GENERAL MULTI-PROTOCOL LABEL-SWITCHING PATH**

(30) Priority: 31.12.2004 CN 200410103135
(71) Applicant: Huawei Technologies Co., Ltd., Longgang District, Shenzhen, Guangdong 518129 (CN)
(72) Inventor: Cai, Junzhou, Huawei Technologies Co., Ltd., Shenzhen, Guangdong 518129 (CN)
(74) Representative: Colombo, Michel
(86) International application number: PCT/CN2005/002269
(87) International publication number: WO 2006/069523

(57) **Abstract**

A method for node restart and recovery on Label Switched Path (LSP) of Generalized Multi-Protocol Label Switching (GMPLS), including: after receiving, by a normal neighbor node, a HELLO ACK (acknowledgement) message from a restarting node, starting a synchronous recovery timer; when the synchronous recovery timer has not timed out, self-refreshing, by the normal neighbor node, its state block; in the procedure of self-refreshing, sending a Resource reSerVation Protocol (RSVP) message, which includes the recovery information, to a restarting node; recovering, by the restarting node, its state block according to the RSVP message; after the synchronous recovery of the normal neighbor node and the restarting node is accomplished, or after the synchronous recovery timer times out, stopping the synchronous recovery timer. It can be insured by utilizing the present invention that a Label Switched Path can be recovered correctly after multiple nodes on the Label Switched Path restart, improving the ability for recovering the control plane of the Automatically Switched Optical Network.

## Description

### Field of the Invention

The present invention relates to the field of optical network technology, and particularly to a method for node restart and recovery on Label Switched Path (LSP) of Generalized Multi-Protocol Label Switching (GMPLS).

### Background of the Invention

At present, due to the bandwidth requirements resulted from the rapid increasement of Internet Protocol (IP) traffic and the new types of bandwidth utilization modes introduced by Wavelength Division Multiplex (WDM) technology, dynamic allocation of network bandwidth is required to support the burst and the uncertainty of IP traffic. However, the conventional static optical transport network can not support the dynamic allocation, thus Automatically Switched Optical Network (ASON) is developed. The Automatically Switched Optical Network directly introduces an IP-based intelligent control technology over a fiber network, which can support the dynamic setup and release of connections, allocate network resources reasonably based on Traffic Engineering (TE), and provide good network protection/recovery performance.

The Automatically Switched Optical Network adopts a hierarchical architecture, including three planes: a data/transport plane, a management plane, and a control plane; the bandwidth requirement is put forward by a service layer, and a standard control plane renders the transport plane to provide a dynamic automatic routing; the control plane can be implemented by means of User Network Interface/Network Node Interface (UNI/NNI) signaling, or by means of management system interface, and the network management plane manages the whole network.

The Generalized Multi-Protocol Label Switching (GMPLS) control plane is introduced into the Automatically Switched Optical Network, which provides the network a powerful viability and implements the dynamic application, release and reconfiguration of bandwidth, simplifies the network management and provides new value-added services. Compared with the conventional Multiple Protocol Label Switching (MPLS), besides packet switching, GMPLS supports the functions such as Lower Order Path, Higher Order Path, wavelength switching and fiber switching, etc. When the GMPLS based on IP network is applied to carrier-class optical transport network, the biggest challenge it faces is the stability and the security issues; whether the in-band mode or the out-of-band mode is adopted, a control plane failure should not influence the established connections in the transport plane. In practical application, whether the failure occurs at UNI, NNI or connection control interface (CCI) of the control plane, the network should have good isolation and recovery capabilities; and after the recovery from one-point or multi-point power-down, the traffic and the signaling should be able to be recovered to normal.

At present, most vendors employ Resource reservation Protocol-Traffic Engineering (RSVP-TE) Extension protocol to implement signaling protocols of the control plane.

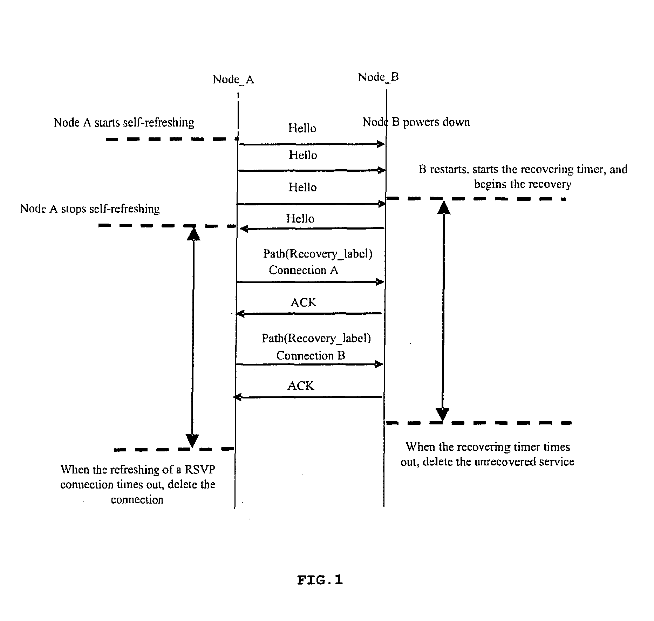

UNI 1.0 standard and GMPLS RSVP-TE standard give the recovery mechanism of the control plane after a complete failure of the control plane (such as node restart) and a loss of signaling information. As shown in FIG.1, the detailed procedure is as follows:

(1) The power-down occurs in Node B, and HELLO (acknowledgement) response is not sent to Node A.

(2) If Node A does not receive HELLO response from Node B and the HELLO Session times out, Node A starts a Restart_Timer. In normal conditions, if periodic refreshing messages are not received from the neighbor node, Path State Block (PSB) and Reservation State Block (RSB) will time out, which results in deletion of a connection. After starting the Restart_Timer, Node A enters into a self-refresh procedure: although Node A does not receive periodic refreshing messages from Node B so as to refresh the Reservation State Blocks (RSBs) connected via Node B, Node A still stores these RSBs, as if it received the periodic refreshing messages from neighbor B as usual.

(3) Node A sends HELLO messages to Node B continuously, to request acknowledgement from Node B.

(4) After accomplishing a restart, Node B starts a Recovery_timer. It is required for the neighbor(s) of Node B to accomplish the recovery of the Label Switched Paths (LSPs) that pass through the link (s) between Node B and the neighbor (s) before the Recovery_timer times out. After the Recovery_timer times out, Node B will delete the LSPs which are not recovered.

(5) After accomplishing the restart, Node B receives HELLO messages sent from Node A, and then sends a HELLO message to Node A. After receiving the HELLO message from Node B, Node A stops the Restart_Timer, so as to stop the self-refresh.

(6) Node A initiates the recovery of LSPs passing through Node B. For each LSP passing through Node B, Node A sends a Path message to Node B, with a Recovery_label object carried in the Path message;

(7) After receiving the Path message carrying Recovery_label from Node A, Node B proceeds with a process of recovery.

The solution described above can only deal with the case that one node restarts; if multiple nodes on a Label Switched Path (LSP) restart, the following circumstances will occur:

1. When two successive nodes restart, the upstream node restarts at first, and the downstream node does not restart for a long time.

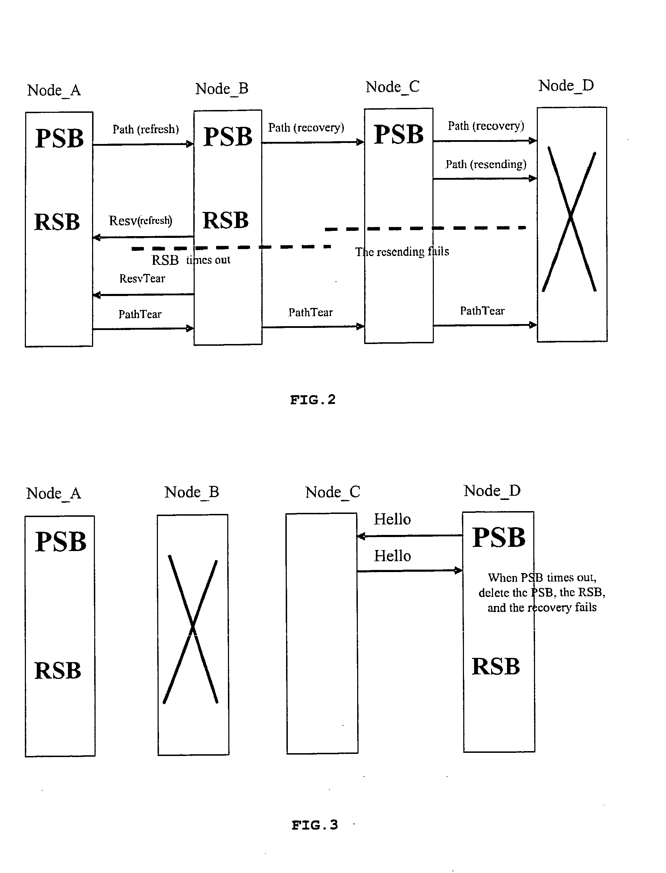

As shown in FIG.2, it is assumed that an LSP passes through A->B->C->D, and the power-down occurs in Node C and Node D. Supposing that Node C restarts firstly, and Node D does not restart for a long time, after Node C accomplishes the restart, Node B receives a HELLO message from Node C again, and sends a Path (carrying Recovery_label) message to Node C for recovery; after receiving the Path message, Node C proceeds with a process of recovery, recovering the corresponding control block PSB locally. After Node C has recovered the PSB, it sends a Path (carrying Recovery_label) message to Node D for recovery; but because Node D has not accomplished the restart, it can not proceed with a process of recovery, and the corresponding RSB on Node C can not be recovered either, therefore Node C can not refresh the RSB on Node B.

Since Node B will stop the Restart_Timer after receiving a HELLO response from Node C again and thus stopping the self-refresh procedure, the RSB on Node B will time out if the RSB can not receive a corresponding refresh message from Node C. After the RSB times out, Node B sends a ResvTear message to Node A, and deletes the local RSB synchronously.

After receiving the ResvTear message, the initiating node A deletes the local RSB and the local PSB, and synchronously sends a PathTear message for deleting the corresponding PSB.

After receiving a PathTear message, Node B and Node C delete the local PSBs.

Thus, all the signaling information of this LSP in Node A, Node B and Node C may be deleted; and then even if Node D restarts successfully, this LSP may not be recovered, which results in a recovery failure of this LSP.

2. When two successive nodes restart, the downstream node restarts at first, and the upstream node does not restart for a long time.

As shown in FIG.3, it is assumed that an LSP passes through A->B->C->D, and the power-down occurs in Node B and Node C. Supposing that Node C restarts at first, and Node B does not restart for a long time, after Node C has restarted, Node D receives a HELLO message from Node C again, and then stops the Restart_Timer, thus stopping the self-refresh procedure.

Since Node C is an upstream node, the signaling information will lose after the restart of Node C, and Node B may not accomplish the restart for a long time, such that the signaling information on Node C can not be recovered, and Node C can not refresh the PSB on Node D; therefore, the PSB on Node D will time out because it can not be refreshed for a long time, which results in the deletion of PSB and RSB, and therefore the recovery fails.

### Summary of the Invention

The present invention aims to provide a method for node restart and recovery on Label Switched Path (LSP) of Generalized Multi-Protocol Label Switching (GMPLS), so as to overcome the drawback in prior art that an LSP can not be recovered when multiple nodes on the LSP restart, and ensure the correct recovery of the LSP.

The present invention provides the following technical solution:

A method for node restart and recovery on Label Switched Path (LSP) of Generalized Multi-Protocol Label Switching (GMPLS), including:

A. after receiving by a normal neighbor node a HELLO ACK (acknowledgement) message from a restarting node, starting a synchronous recovery timer;

B. when the synchronous recovery timer has not timed out, the normal neighbor node self-refreshing its own state block;

C. in the procedure of self-refreshing, sending a Resource reservation Protocol (RSVP) message, which includes the recovery information, to a restarting node;

D. the restarting node recovering its own state block according to the RSVP message;

E. after the synchronous recovery of the normal neighbor node and the restarting node is accomplished, or after the synchronous recovery timer times out, stopping the synchronous recovery timer.

Before starting the synchronous recovery timer:

A1. obtaining a time period of the recovery timer of the restarting node according to the HELLO message from the restarting node;

A2. configuring the time period of the synchronous recovery timer according to that of the recovery timer of the restarting node.

The time period of the synchronous recovery timer is configured greater than or equal to that of the recovery timer of the restarting node.

When the normal neighbor node is an upstream node of the restarting node,

after the refreshing of a Reservation State Block (RSB) on the normal neighbor node times out, determining whether the synchronous recovery timer has timed out;

if the synchronous recovery timer has not timed out, self-refreshing the RSB;

Otherwise, performing a timeout process on the RSB.

The normal neighbor node is a downstream node of the restarting node.

After the refreshing of a Path State Block (PSB) on the normal neighbor node times out, determining whether the synchronous recovery timer has timed out;

If the synchronous recovery timer has not timed out, self-refreshing the PSB;

Otherwise, performing a timeout process on the PSB.

During the procedure of self-refreshing, after receiving the corresponding Path message from the restarting node, sending a corresponding Resv message to the restarting node.

The accomplishment of the synchronous recovery refers to that a complete recovery of all the LSPs between the normal node and the restarting node is accomplished.

It can be seen from the above technical solution provided by the present invention that in the present invention, when one or multiple nodes restart on an LSP, after receiving a HELLO message from the restarting node, although stopping the self-refreshing timer (Restart_Timer), the normally operating neighbor node does not stop the self-refreshing of the state block(PSB or RSB), that is, to prolong the processing time of self-refreshing for its state block by starting a synchronous recovery timer (Restore_timer) ; by configuring the time period of the timer and waiting for the neighbor node of the restarting node to accomplish the restart, the recovery failure due to the timeout of the refreshing of the state block is avoided, and the ability for recovering the control plane of the Automatically Switched Optical Network (ASON) is improved.

### Brief Description of the Drawings

FIG.1 is a schematic diagram illustrating a recovery procedure after the restart of a node on a GMPLS path in the prior art;

FIG.2 is a schematic diagram illustrating a recovery failure on the restart of two successive nodes on a GMPLS path in the prior art;

FIG.3 is another schematic diagram illustrating a recovery failure on the restart of two successive nodes on a GMPLS path in the prior art;

FIG.4 is a flow diagram of the method according to an embodiment of the present invention;

FIG.5 is a processing flow diagram of the method according to an embodiment of the present invention, in which a single node restarts on an LSP;

FIG.6 is a processing flow diagram of the method according to an embodiment of the present invention, in which two successive nodes restart and the upstream node restarts firstly;

FIG.7 is a processing flow diagram of the method according to an embodiment of the present invention, in which two successive nodes restart and the downstream node restarts firstly.

### Detailed Description of the Preferred Embodiments

The key of the present invention lies in that, in case that any node on a Label Switched Path (LSP) restarts, upon receiving a HELLO message from the restarting node, a normally operating neighbor node starts a synchronous recovery timer (Restore_timer), and the time-out interval of the Restore_timer is configured the same as that of the recovery timer (Recovery_Timer) started on the restarting node. Thus, before the Restore_timer times out, a local state block: Path State Block (PSB) or Reservation State Block (RSB) is self-refreshed until a refresh message for refreshing the local state block is received from the restarted neighbor node; only after the Restore_timer times out, it proceeds with the normal flow procedure for block (PSB or RSB) timeout. Thus it is guaranteed that when there are multiple nodes restarting on an LSP, and a neighbor node of the restarting node has not accomplished the restart, the refresh timing out and then the recovery failure will not occur as a result.

As known by those skilled in the art, similar to Multi-Protocol Label Switching (MPLS), Generalized Multi-Protocol Label Switching (GMPLS) network is composed of two main elements: Label Switched Node and Label Switched Path (LSP). However the Label Switching Routers (LSRs) of GMPLS include all types of nodes, and the interfaces on these LSRs can be divided into several classes: Packet Switch Capable (PSC) interfaces, Time-Division Multiplex Capable (TDM) interfaces, Lambda Switch Capable (LSC) interfaces, and Fiber-Switch Capable (FSC) interfaces. LSP may be a virtual channel through which IP packets are transmitted, as well as a TDM circuit or a Dense Wavelength Division Multiplexing (DWDM) channel, or even a fiber. GMPLS designs dedicated label formats for circuit switching and optical switching respectively, so as to meet the requirements of different services.

GMPLS differs from MPLS in that the label of the signaling protocol is extended from the original 32-bit number to an arbitrary byte-length array, and Constraint-based Routing Label Distribution Protocol (CR-LDP) and Resource reserVation Protocol-Traffic Engineering (RSVP-TE) Extension are modified to transmit their own information via the generalized label length type in CR-LDP or the generalized label object in RSVP-TE.

The signaling protocol of MPLS traffic engineering is adapted to map an explicit route designated by the route protocol or the administrator to a practical physical channel, that is, each LSR node in the channel allocates and binds a label value for the route at the respective node, and establishes and maintains a corresponding forwarding state, so as to set up an LSP. Resource reSerVation Protocol (RSVP) is a signaling protocol which can be extended for the MPLS traffic engineering.

RSVP has two types of important messages: Path message, from a sender to a receiver; and Resv message, from a receiver to an initiator.

A RSVP message includes the following information:

1) How the network recognizes a session flow (classification information);

2) The quantitative parameter describing the session flow (such as data rate);

3) The service type required to be provided to the session flow by the network;

4) The policy information (such as user identifier).

The working flow of RSVP is as follows:

The sender in a session sending a Path message at first, and if a device along the path supports RSVP, the device processing the message, otherwise continuing the sending of the message;

If the device can meet the resource requirement and the path message complies with the local management policy, the device performing the resource allocation and continuing sending the Path message, otherwise sending a reject message to the sender;

If the receiver in the session identifies with the session flow required by the sender, sending a Resv message, otherwise sending a reject message;

When the sender receives the Resv message, it means that the session can be proceeded with, otherwise it means a failure.

The Path and Resv messages of RSVP must be refreshed periodically on the LSRs of the LSP. If the refreshing message is not transmitted, LSP state will time out automatically and thus be deleted at last.

HELLO protocol of RSVP is adapted to detect the loss of a neighbor node or to reset the RSVP state information of the neighbor. HELLO protocol extension is composed of HELLO message, HELLORequest object and HELLOAck object. The HELLO processing between two neighbors indicates an independent selection for the fault detection interval. Each neighbor can send a HELLORequest object automatically. Each HELLORequest object is responsed via a HELLOAck object.

HELLO extension of RSVP can enable a RSVP node to determine whether a neighbor node can be accessed, and by such a mechanism a fault-detect ability of node level is achieved. The neighbor fault detection is implemented by collecting and storing the Instance value of a neighbor node; upon the instance value of the neighbor node changes or a HELLO message is not sent by the neighbor node in time, it can be determined that the neighbor node restarts or a fault occurs on the connection between the nodes. The node sends a HELLO message including a HELLO REQUEST object to the neighbor node periodically; the time interval, in which a HELLO message is created, is controlled by the parameter HELLO interval (a time interval), of which the default value is 5ms.

When the node can not receive the HELLO response from the neighbor node till the HELLO session times out, the node starts a self-refresh timer (Restart_Timer), and the PSB or the RSB of this node is self-refreshed by means of the timer; when the refresh message can not be received within a time period till the Restart_Timer times out, the local PSB or RSB is deleted.

Based on the above protocols, in order to avoid the recovery failure caused by the restart of multiple nodes on a single LSP, in the present invention, a synchronous recovery timer (Restore_timer) is started after the Restart_Timer is stopped; the PSB or RSB on this node is continued being self-refreshed in a time period to wait for the neighbor node of the restarting node to accomplish the restart; and the time period of the Restore_timer is configured according to the practical requirement of the network, so as to guarantee the LSP can be recovered.

Hereunder the present invention will be further described in detail with reference to the embodiments and the accompanying drawings.

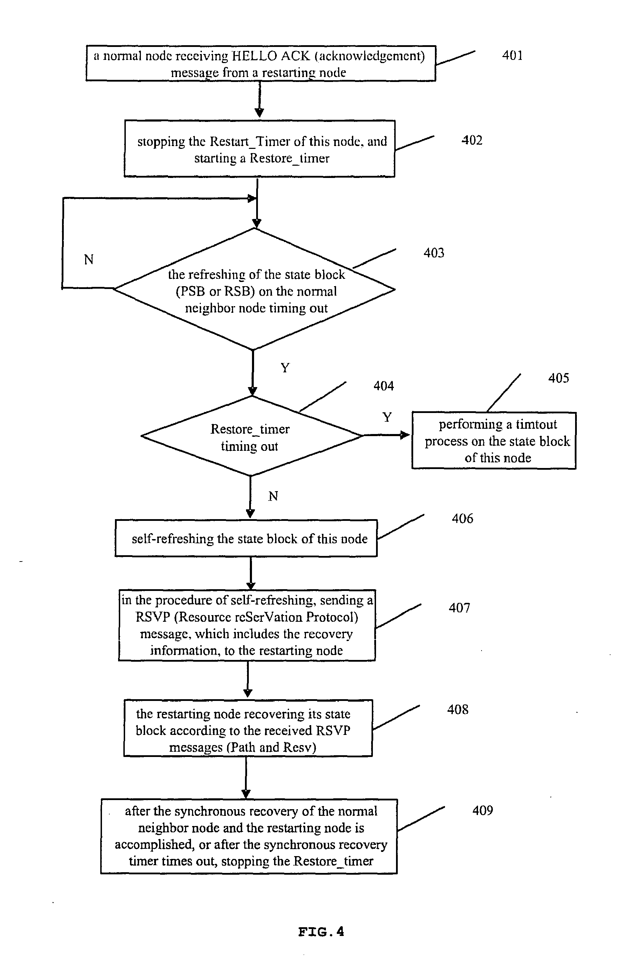

Referring to FIG. 4, in which a flow diagram of the method according to an embodiment of the present invention is shown, including the following steps:

Step 401: a normal neighbor node receiving a HELLO ACK (acknowledgement) message from the restarting node.

When accomplishing the restart, the restarting node starts a Recovery_timer; and the restarting node requires all the LSPs of which to be recovered by the neighbor node before the timer times out. When receiving a HELLO message from the normal neighbor node, the restarting node sends a HELLO ACK message, which includes the information of the time period of the Recovery_timer, to the neighbor node.

Step 402: stopping the Restart_Timer of this node, and starting a Restore_timer.

The time period of the Restore_timer may be determined according to the time period of the Recovery_timer of the restarting node carried by the HELLO message from the restarting node, which may also be configured by the user himself according to the practical requirement.

For example, the time period of the Restore_timer can be configured greater than or equal to the time period of the Recovery_timer of the restarting node.

Step 403: determining whether the refreshing of the state block (PSB or RSB) on the normal neighbor node times out.

As mentioned above, in RSVP the nodes on LSP are refreshed periodically via Path and Resv messages. If the refreshing messages are not transmitted, that is, the corresponding Path and Resv messages are not received, the state of the LSP will time out automatically and be deleted at last, that is, all the PSBs and RSBs on this LSP will be deleted. A ResvTear message sent by a downstream node results in the delete of the local RSB, and a PathTear (path delete) message sent by an upstream node results in the delete of the local PSB and RSB.

In case that the normal neighbor node is an upstream node of the restarting node, when the restarting node accomplishes the restarting, the normal neighbor node sends a Path (Recovery_label) message to the restarting node, and then waits for a Resv acknowledgement message to be returned by the restarting node so as to refresh the RSB on the normal neighbor node. If the Resv acknowledgement message is not received for a long time, the refreshing of the RSB will time out.

In case that the normal neighbor node is a downstream node of the restarting node, because the restarting node is an upstream node and the signaling information is lost after the restarting of the restarting node, the recovery can not be initiated. The restarting node recovers its PSB only if receiving a Path (Recovery_label) message sent by its upstream node. In the same way, the downstream normal neighbor node of the restarting node will wait for a Path (refresh) message to be sent by the restarting node, so as to refresh the PSB of the normal neighbor node; if the Path (refresh) message is not received for a long time, the refreshing of the RSB will time out.

If the refreshing of the state block has not timed out, the flow returns to Step 403 to wait for the timeout of the refreshing of the state block of the normal neighbor node.

When the refreshing of the state block times out, the flow proceeds to Step 404: determining whether the Restore_timer times out.

If the Restore_timer has timed out, the flow proceeds to Step 405: performing a timeout process on the state block of the normal neighbor node, that is, performing the process according to the normal timeout flow of the PSB or RSB.

If the timer has not timed out, the flow proceeds to Step 406: self-refreshing the state block.

Then, to the flow proceeds to Step 407: in the procedure of self-refreshing, sending a Resource reSerVation Protocol (RSVP) message including recovery information to the restarting node; in case that the normal node is an upstream node of the restarting node, sending a Path message including the recovery information by this normal node to the restarting node, and the restarting node recovering its PSB according to the Path message;

In case that the normal neighbor node is a downstream node of the restarting node, when the PSB of the restarting node is recovered, the restarting node sends a Path (recovery) message to the downstream normal node; upon receiving the Path message, the normal node sends a Resv (recovery) message to the upstream restarting node, and the restarting node recovers its RSB according to the Resv message. Before receiving the Path message from the restarted upstream neighbor node, it is prohibited to send a corresponding Resv message to the restarted upstream neighbor node.

That is, the flow proceeds to Step 408: the restarting node recovers its state block according to the received RSVP messages (Path and Resv).

After the recovery of the PSB or the RSB of the restarting node is accomplished, the restarting node will send RSVP messages to its downstream or upstream normal node. After the synchronous recovery of the normal neighbor node and the restarting node is accomplished, the Restore_timer needs to be stopped so as to stop the self-refresh performing on the state block of the restarting node.

Thus, the flow proceeds to Step 409: before the Restore_timer times out, after the synchronous recovery of the normal neighbor node and the restarting node is accomplished, the Restore_timer is stopped. The accomplishment of the synchronous recovery means that the recovery of all the LSPs between the normal node and the restarting node is accomplished. Of course, after the Restore_timer times out, the timer also needs to be stopped.

When the PSB and the RSB of the restarting node are recovered, the LSP is recovered again. When all the LSPs between the normal node and the restarting node are recovered, the Restore_timer is stopped.

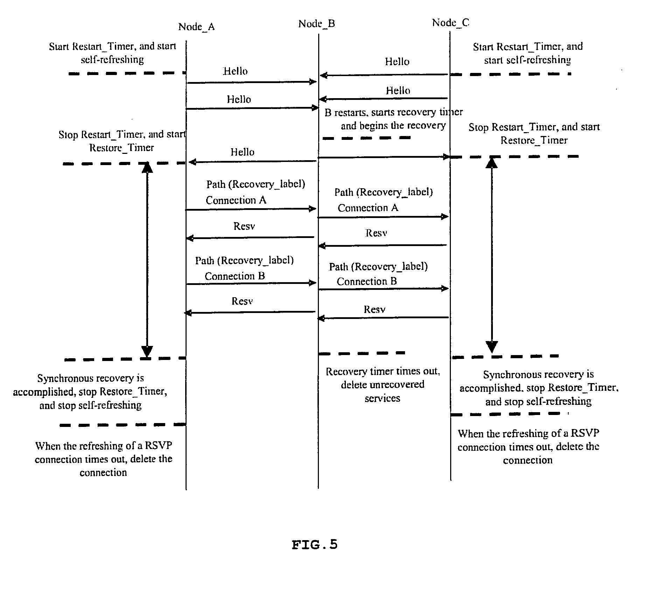

When there is only a single node restarting on an LSP, the restart and recovery procedure is shown in FIG.5:

Supposing that there is an LSP, the path of which is A->B->C. And supposing that Node B powers down and restarts.

The recovering procedure is as follows:

1) Node A Receiving a Hello acknowledgement again from Node B, stopping the Restart_Timer, detecting that Node B restarts, and starting a Restore_timer; in the same way, Node C receiving a Hello acknowledgement from Node B again, and also stopping the Restart_Timer, detecting that Node B restarts, and starting a Restore_timer;

2) Node A sending a Path (carrying Recovery_label) message for recovering Node B;

3) After receiving the Path(carrying Recovery_label) message, Node B recovering the corresponding PSB, and sending a Path(carrying Recovery_label) message to Node C for recovering Node C;

4) Because Node C is a normal node, and has not restarted, Node C processing this Path message as a refreshing message. Node C sending a Resv message to Node B;

5) After receiving the Resv message, Node B recovering the corresponding RSB, and sending a Resv message to the upstream Node A;

6) Because Node A is a normal node, and has not restarted, after receiving the Resv message, Node A processing the Resv message as a refreshing message.

Thus, an LSP is recovered successfully; and after the recovery of all the LSPs is accomplished, the Restore_timers of Node A and Node C are to be stopped.

If multiple nodes on an LSP need to be restarted, the recovering ability of node can be improved according to the method of the present invention.

Hereunder the node recovery procedure, in case that two nodes restart successively on an LSP, will be described in detail with reference to the accompanying drawings:

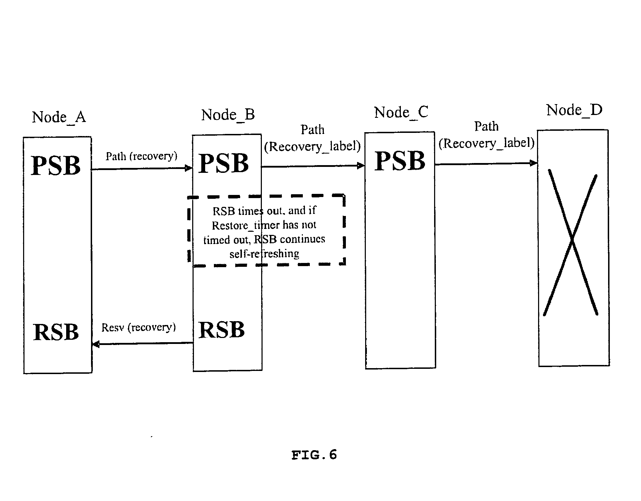

Firstly referring to FIG.6, which illustrates the processing flow diagram in case that the upstream node restarts firstly in the method according to an embodiment of the present invention:

Supposing that there is an LSP, the path of which is A->B->C->D. And supposing that both Node C and Node D power down, and then Node C accomplishes the restart, while Node D does not restart for a long time.

1. After receiving a HELLO message from the restarting Node C again, the normally operating neighbor Node B stopping the Restart_Timer (which means that the neighbor restarting node has accomplished the restart), and starting a Restore_timer; the time period of the Restore_timer is the same as that of the Recovery_timer started on the restarting Node C, which can be obtained from the HELLO message sent by Node C to Node B;

2. Node B sending a Path (carrying Recovery_label) message for recovering Node C; since Node D has not restarted, Node C will not receive a corresponding Resv message from Node D, and Node C will not respond Node B with a corresponding Resv message;

3. Node B does not receive the Resv message sent from Node C at all times, and after the RSB times out, if the Restore_timer is still in operation (has not timed out), self-refreshing the RSB; after the Restore_timer times out, performing the process according to the normal timeout flow of RSB in the standard protocol, that is, sending a ResvTear message to the upstream node to initiate a deletion, and deleting the local RSB;

4. after Node D accomplished the restart, Node C sending a Path (carrying Recovery_label) message to recover Node D; and after receiving the recovering Path message, Node D establishing a corresponding PSB and RSB, and constructing a corresponding Resv message and sending the message to Node C;

5. after receiving the Resv message as a response from Node D, Node C establishing a corresponding RSB in the same way, and constructing a corresponding Resv message and sending the message to the upstream Node B;

6. Node B receiving the corresponding Resv message as a response from Node C, and performing a normal refreshing process since Node B is normal. Thus the LSP is recovered successfully.

It is obvious that, in the way described above, the problem that the RSB on Node B times out resulted in that Node D does not restart for a long time, and as a result deleting the LSP is initiated, can be avoided.

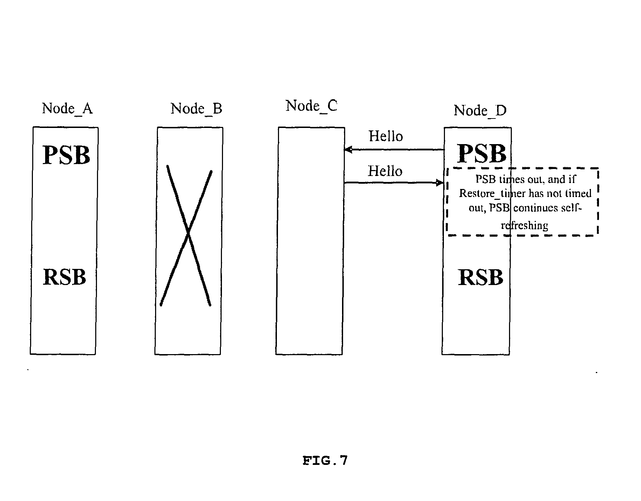

Referring to FIG.7, which illustrates the processing flow diagram in case that the downstream node restarts firstly in the method according to an embodiment of the present invention:

Supposing that there is an LSP, the path of which is A->B->C->D. And supposing that both Node B and C power down, and then Node C accomplishes the restart, while Node B does not restart for a long time.

1. After receiving a HELLO response message from the restarting Node C again, the normally operating neighbor Node D stopping the Restart_Timer (which means that neighbor restarting node has accomplished the restart), and starting a Restore_timer; the time period of the timer is the same as that of the Recovery_timer of the neighbor restarting Node C, which can be obtained from the HELLO message sent by the restarting node to this node;

2. since Node C is an upstream node of Node D, after Node C restarts, the signaling information will be lost; therefore Node C can not initiate a recovery;

3. Node C will not refresh the PSB on Node D, and after the PSB on Node D times out, if the Restore_timer is still in operation (has not timed out), self-refreshing the PSB; after the Restore_timer times out, performing the process according to the normal timeout flow of PSB in the standard protocol, that is, sending a PathTear message to the downstream node to initiate a deletion, and deleting the local PSB and the local RSB; if the PSB is in the state of self-refreshing, and has not received the Path message sent from Node C, not sending a Revs message to Node C when the refreshing of the corresponding RSB on Node D times out;

4. after Node B accomplishes the restart, Node A detecting that Node B restarts, stopping the Restart_Timer in the same way (which means that the neighbor node has accomplished the restart), and starting a Restore_timer; the time period of the timer is the same as that of the Recovery_timer of the neighbor restarting Node C, which can be obtained from the HELLO message sent from the restarting node to this node; sending a Path (carrying Recovery_label) message to Node B for recovering Node B;

5. after receiving the Path (carrying Recovery_label) message, Node B performing a recovery process, and then sending a Path(carrying Recovery_label) message to Node C;

6. in the same way, after receiving the Path (carrying Recovery_label) message, Node C performing a recovery process, and then sending a Path (carrying Recovery_label) message to Node D;

7. after Node D receives the Path (carrying Recovery_label) message, since Node D has not restarted, the information which stores is complete; Node D processing the Path message as a refreshing message; and Node D responding Node C with a Resv message;

8. after receiving the Resv message, Node C performing the corresponding recovery, and then sending a Resv message to Node B;

9. in the same way, Node B performing the corresponding process;

10. after Node A receives the Resv message from Node B, since Node A has not restarted, processing the Resv message as a refreshing message.

Thus, the LSP is recovered.

In case that there are multiple nodes restarting on an LSP, the processing procedure is similar to that described above, and therefore will not be described unnecessarily.

According to the practical requirement of the system, the time periods of the Restore_timers of individual normal neighbor nodes may be configured reasonably; for example, the time period of the Restore_timer of an upstream neighbor node is configured greater than or equal to the time period of the Restore_timer of a downstream neighbor node; of course, the configuration of the time periods of the Restore_timers relates to many factors, for example, the starting speed, the repairing time of nodal fault etc. As long as the time periods of Restore_timer of individual normal neighbor nodes are configured reasonably, the recovery ability of node may be improved, and the requirement of Automatically Switched Optical Network (ASON) is satisfied better.

The present invention has been described by way of embodiments, while it is apparent for those skilled in the art that many variations and modifications can be made to the present invention, without departing the spirit of the present invention. It is intended that those variations and modifications are included in the accompanying claims without departing the spirit of the present invention.

## Claims

1. A method for node restart and recovery on Label Switched Path (LSP) of Generalized Multi-Protocol Label Switching (GMPLS), comprising:
A. after receiving by a normal neighbor node a HELLO ACK (acknowledgement) message from a restarting node, starting a synchronous recovery timer;
B. when the synchronous recovery timer has not timed out, the normal neighbor node self-refreshing its own state block;
C. in the procedure of self-refreshing, sending a Resource reservation Protocol (RSVP) message, which comprises the recovery information, to a restarting node;
D. the restarting node recovering its own state block according to the RSVP message;
E. after the synchronous recovery of the normal neighbor node and the restarting node is accomplished, or after the synchronous recovery timer times out, stopping the synchronous recovery timer.

2. The method according to claim 1, before said starting the synchronous recovery timer, said method further comprises:
A1. obtaining a time period of the recovery timer of the restarting node according to the HELLO message from the restarting node;
A2. configuring the time period of the synchronous recovery timer according to that of the recovery timer of the restarting node.

3. The method according to claim 2, wherein the time period of the synchronous recovery timer is configured greater than or equal to that of the recovery timer of the restarting node.

4. The method according to claim 1, wherein the normal neighbor node is an upstream node of the restarting node.

5. The method according to claim 4, wherein
after the refreshing of a Reservation State Block (RSB) on the normal neighbor node times out, determining whether the synchronous recovery timer has timed out;

6. The method according to claim 5, wherein if the synchronous recovery timer has not timed out, self-refreshing the RSB; otherwise, performing a timeout process on the RSB.

7. The method according to claim 1, wherein the normal neighbor node is a downstream node of the restarting node.

8. The method according to claim 7, wherein after the refreshing of a Path State Block (PSB) on the normal neighbor node times out, determining whether the synchronous recovery timer has timed out.

9. The method according to claim 7, wherein if the synchronous recovery timer has not timed out, self-refreshing the PSB; otherwise, performing a timeout process on the PSB.

10. The method according to claim 7, wherein
during the procedure of self-refreshing, after receiving the corresponding Path message from the restarting node, sending a corresponding Resv message to the restarting node.

11. The method according to claim 1, wherein the accomplishment of the synchronous recovery refers to that a complete recovery of all the LSPs between the normal node and the restarting node is accomplished.
